# EUROPÄISCHE PATENTSCHRIFT

(11) **EP 4 150 737 B1**
(45) Veröffentlichungstag und Bekanntmachung des Hinweises auf die Patenterteilung: **15.07.2026**
(21) Anmeldenummer: 21721390.9
(22) Anmeldetag: 14.04.2021
(51) Int. Cl.: H02K 15/021, H02K 1/18, H02K 1/27, H01F 1/08, H01F 41/02, B33Y 70/10, B29C 64/118, B29C 64/188, B33Y 10/00, B33Y 80/00, H02K 1/2795

(54) **ELEKTROMOTORBAUTEIL UND VERFAHREN ZUR HERSTELLUNG EINES ELEKTROMOTORBAUTEILS EINES AXIALFLUSSMOTORS, SOWIE AXIALFLUSSMOTOR**
ELECTRIC MOTOR COMPONENT AND METHOD FOR MANUFACTURING AN ELECTRIC MOTOR COMPONENT OF AN AXIAL FLOW MOTOR, AND AXIAL FLOW MOTOR
COMPOSANT DE MOTEUR ÉLECTRIQUE ET PROCÉDÉ DE FABRICATION D'UN COMPOSANT DE MOTEUR ÉLECTRIQUE D'UN MOTEUR À FLUX AXIAL, ET MOTEUR À FLUX AXIAL

(30) Priorität: 14.05.2020 DE 102020113047
(43) Veröffentlichungstag der Anmeldung: 22.03.2023
(73) Patentinhaber: Schaeffler Technologies AG & Co. KG, 91074 Herzogenaurach (DE)
(72) Erfinder: GEBAUER, Peter, 91058 Erlangen (DE); HULLIN, Gregor, 91052 Erlangen (DE); SCHAEPERKOETTER, Claus, 91058 Erlangen (DE); MEHNERT, Peter, 90547 Stein (DE)
(74) Vertreter: Schaeffler Technologies
(86) Internationale Anmeldenummer: PCT/DE2021/100341
(87) Internationale Veröffentlichungsnummer: WO 2021/228306

(56) Entgegenhaltungen:
- EP-A1- 2 523 311
- WO-A1-2016/023961
- DE-A1- 102018 003 864
- US-A1- 2017 155 309
- MANUELA GALATI, PAOLO MINETOLA: "Analysis of Density, Roughness, and Accuracy of the Atomic Diffusion Additive Manufacturing (ADAM)Process for Metal Parts", MATERIALS, vol. 2019,12, 9 December 2019 (2019-12-09), XP055789006, DOI: 10.3390

## Beschreibung

Die Erfindung betrifft ein Verfahren zur Herstellung eines Bauteils, insbesondere Stators, eines Axialflussmotors. Ferner betrifft die Erfindung ein zur Verwendung in einem Axialflussmotor vorgesehenes Elektromotorbauteil sowie einen Axialflussmotor.

US 2017/155309 A1 offenbart eine additive Herstellung der Blechpaketen einer Radial- oder Axialflussmaschine durch einen additiven Herstellungsprozess. Eine elektrische Axialflussmaschine ist zum Beispiel aus der EP 1 203 436 B2 bekannt. Die bekannte elektrische Axialflussmaschine umfasst einen an einer Maschinenwelle angeordneten eisenlosen scheibenförmigen Rotor und zwei neben dem Rotor angeordnete Statoren. Der Rotor weist Permanentmagnete auf, die in einen faserverstärkten Kunststoff eingebettet sind. Jeder Stator umfasst ein ringförmiges Joch, in dem Nuten angebracht sind, welche sich unter Schränkung gegenüber den Permanentmagneten des Rotors ungefähr radial von innen nach außen erstrecken. Das Joch ist aus mehreren Lagen Dynamoblech zusammengesetzt. Durch die Nuten sind Mehrphasenwicklungen, beispielsweise Dreiphasenwicklungen, geführt.

Eine weitere als Axialflussmotor ausgebildete elektrische Maschine ist in der DE 10 2015 223 766 A1 beschrieben. In diesem Fall weist ein Stator eine gesinterte Trägerstruktur auf. An die Trägerstruktur ist ein Einsatz angebunden, der zumindest teilweise einen Polschuh bildet und ein Blechpaket umfasst. Das Blechpaket ist aus einzelnen Blechen aus gestanztem Weicheisenblech aufgebaut.

Die EP 1 081 386 A2 beschreibt einen Axialflussmotor als Komponente einer Kreiselpumpe. Eine Statorwicklung des Axialflussmotors umfasst mehrere Teilwicklungen, welche in Relation zum Rotor des Motors unterschiedlich positioniert sind. Der Rotor ist auch in diesem Fall mit Permanentmagneten bestückt.

Die DE 10 2016 119 650 A1 beschreibt ein Verfahren zur Herstellung eines weichmagnetischen Kernmaterials für elektrische Maschinen und Aktuatoren, wobei das Kernmaterial unter Verwendung additiver Fertigungsverfahren aus Schichtlagen unterschiedlicher Materialkomponenten aufgebaut wird. Hierbei kann eine Materialkomponente keramische Anteile aufweisen. Eine überwiegend metallische Materialkomponente kann einen Siliziumanteil von 6,5 % oder mehr aufweisen. Die additive Fertigung soll unter Verwendung pulverförmiger Ausgangssubstanzen möglich sein. Nach der Formgebung kann ein teilweises Ausblasen des Pulvers des additiven Verfahrens erfolgen. Mit einem in der DE 10 2016 119 650 A1 ebenfalls erwähnten Versintern soll die Porosität des Werkstücks, das heißt Bauteils einer elektrischen Maschine, minimiert werden.

Ein weiteres Verfahren zur Herstellung von Komponenten einer elektrischen Maschine ist in der DE 10 2017 220 735 A1 offenbart. In diesem Fall sollen einzelne Blechlagen eines Stators durch ein dreidimensionales generatives Fertigungsverfahren derart herstellbar sein, dass in abgewinkelten Bereichen der Blechlagen keine Druck- oder Zugspannungen auftreten. Als generatives Fertigungsverfahren ist beispielhaft das Laser-Sinter-Verfahren erwähnt. Als Isolationsmaterial zwischen den Blechlagen wird Isolationsfolie oder Isolationslack vorgeschlagen. Insgesamt handelt es sich bei der Maschine nach der DE 10 2017 220 735 A1 um eine Transversalflussmaschine.

Die DE 10 2017 222 635 A1 beschreibt einen Stator einer Elektromaschine mit Kühlsystem. Hierbei ist die Herstellung einer Kühlkanalwandung durch ein additives Verfahren vorgesehen. Ein zusätzliches Abdichten der Kühlkanalwandung zu einem Statorblech soll hierdurch nicht mehr erforderlich sein.

Aus der EP 3 255 758 A1 ist ein Läufer für eine Reluktanzmaschine bekannt, welcher wenigstens teilweise durch additive Fertigung hergestellt ist. Als Ausgangsmaterialien für die additive Fertigung sollen formlose Massen wie Flüssigkeiten oder Pulver oder formneutrale Materialien wie Band oder Draht nutzbar sein. Der fertige, unter Nutzung additiver Verfahren hergestellte Läufer weist in axialer Richtung abwechselnd Leiterschichten und Isolationsschichten auf. Auch Zwischen-Isolierstege sollen additiv herstellbar sein.

Die WO 2019/022973 A1 befasst sich mit der additiven Herstellung von Fahrzeugkomponenten. Hierbei wird die Nutzung des ADAM-Verfahrens (Atomic Diffusion Additive Manufacturing) vorgeschlagen. Typisch für das ADAM-Verfahren ist die Verwendung eines Ausgangsmaterials, welches Metall und Kunststoff enthält, wobei der Kunststoff weggeschmolzen wird. Das verbleibende Metall wird durch Sintern verdichtet.

Verfahren und Vorrichtungen zur faserverstärkten generativen Fertigung sind zum Beispiel in den Dokumenten WO 2017/123726 A1 und EP 3 444 102 A1 beschrieben.

Ein in der US 10,016,942 B2 beschriebenes, zur Nutzung in einem additiven Verfahren vorgesehenes Filament soll praktisch frei von Poren sein und ein Polymer umfassen, welches einen Mehrstrangkern umgibt.

Die WO 2018/102739 A1 erläutert Möglichkeiten des Sinterns von generativ gefertigten Teilen mit einer Verdichtungsverbindungsplattform.

Die US 2018/0236546 A1 schlägt im Zusammenhang mit additiver Fertigung ein Sintern auf zwei Temperaturniveaus vor, wobei ein erstes Temperaturniveau 500 bis 700 Grad Celsius und ein zweites Temperaturniveau 1000 bis 1200 Grad Celsius beträgt.

Ein 3-D-Druck-Verfahren, welches die Einbettung von Komponenten in ein 3-D-Druckmaterial vorsieht, ist in der WO 2016/146374 A1 offenbart. Die eingebetteten Komponenten können sich hierbei hinsichtlich ihrer thermischen oder magnetischen Eigenschaften von dem umgebenden 3-D-Druckmaterial unterscheiden.

Möglichkeiten der Herstellung beschichteter Filamente für extrusionsbasierte 3-D-Druckverfahren sind in der WO 2014/0172148 A1 beschrieben. Hierbei ist vorgesehen, Filamente außerhalb des Druckers in einem getrennten Verfahren zu beschichten.

Die DE 10 2018 003 864 A1 offenbart ein Verfahren zum Drucken und Sintern von Formkörpern, welche aus metall- und keramikgefüllten Filamenten erzeugt wurden.

Unabhängig von additiven Fertigungsverfahren wird zur Herstellung von Komponenten elektrischer Maschinen häufig Elektroband verwendet. Ein in der DE 10 2018 209 553 A1 beschriebenes, lackbeschichtetes Elektroband kann einen Gesamtlegierungsanteil von Silizium und Aluminium von gleich oder mehr als 1 %, 2 %, 3 % oder 4 % aufweisen. Als mögliche Siliziumanteile sind die Werte 0,8 %, 1,5 %, 2 % und 3 % genannt.

Ein weiteres, in der DE 10 2018 201 622 A1 beschriebenes Elektroband weist einen Siliziumgehalt von 2,3 bis 2,7 % und einen Aluminiumgehalt von 0,3 bis 0,8 %, jeweils in Gewichts-Prozent angegeben, auf.

Die WO 2016/023961 A1 beschreibt einen Magneten aufweisend eine erste Region und eine zweite Region mit unterschiedlichen magnetischen Eigenschaften sowie ein Verfahren zur Herstellung des Magneten. In einer weiteren Region des Magneten kann eine elektrisch isolierende Schicht angeordnet sein. Weiterhin ist ein Einsatz derartiger Magnete in Schlitzen eines Rotors für einen Elektromotor beschrieben.

Der Artikel "Analysis of Density, Roughness, and Accuracy of the Atomic Diffusion Additive Manufacturing (ADAM) Process for Metal Parts", M. Galatti, P. Minetola, in Materials 2019, 12, 4122, beschreibt ein additives Verfahren zum Aufbau metallischer Bauteile.

Die EP 2 523 311 A1 beschreibt einen bürstenlosen Axialspaltmotor mit einem Stator, der eine Mehrzahl von Spulen enthält, und einem Rotor, der eine Mehrzahl von Permanentmagneten enthält. Zur Bildung eines Jochs ist eine Pfannkuchenwicklung beschrieben, welche durch spiralförmiges Wickeln eines bandförmigen weichmagnetischen Materials, dessen eine Oberfläche mit einem Isoliermaterial bedeckt ist gebildet ist oder alternativ durch spiralförmiges Wickeln eines bandförmigen weichmagnetischen Materials mit dazwischen angeordneten Isolierblättern gebildet ist. Das bandförmige weichmagnetische Material wird durch Walzen eines weichmagnetischen Materials auf reiner Eisenbasis oder mit geringem Siliziumzusatz erhalten und anschließend geglüht.

Der Erfindung liegt die Aufgabe zugrunde, einen als Axialflussmotor ausgebildeten Elektromotor gegenüber dem genannten Stand der Technik insbesondere unter fertigungstechnischen Aspekten weiterzuentwickeln.

Diese Aufgabe wird erfindungsgemäß gelöst durch ein Verfahren zur Herstellung eines Elektromotorbauteils, das heißt Stators oder Rotors, gemäß Anspruch 1. Ebenso wird die Aufgabe gelöst durch ein zur Verwendung in einem Axialflussmotor vorgesehenen Elektromotorbauteil mit den Merkmalen des Anspruchs 5. Die Aufgabe wird weiterhin durch einen Axialflussmotor gemäß Anspruch 7 gelöst. Im Folgenden im Zusammenhang mit dem Elektromotorbauteil und dem Axialflussmotor erläuterte Ausgestaltungen und Vorteile der Erfindung gelten sinngemäß auch für das Herstellungsverfahren und umgekehrt.

Die Erfindung geht von der Überlegung aus, dass eine Aktivkomponente, das heißt ein Rotor oder ein Stator, einer elektrischen Maschine bei einer Axialflussmaschine ebenso wie bei einer Radialflussmaschine hinsichtlich Wechselfeldverlusten optimiert sein sollte, um einen möglichst hohen Wirkungsgrad des Elektromotors zu erreichen.

Im Vergleich zu einer Radialflussmaschine sind bei einer Axialflussmaschine komplexere Anforderungen gegeben, was die in Bezug auf die Minimierung von Wechselfeldverlusten optimierte Anordnung und Trennung von Schichten aus leitendem Material betrifft. Diese Komplexität drückt sich im Beispiel der genannten DE 10 2015 223 766 A1 dadurch aus, dass eine Vielzahl einzelner Blechpakete mit einer Trägerstruktur eines Stators verbunden ist. Ein anderer, prinzipiell bekannter Ansatz liegt in der Verwendung von SMC-Materialien (soft magnetic composite), wie sie zum Beispiel in der WO 2016/066714 A2 beschrieben sind. SMCs enthalten Metallpartikel, die elektrisch gegeneinander isoliert sind.

In Abkehr von den bekannten Verfahren umfasst das anmeldungsgemäße Verfahren zur Herstellung eines Elektromotorbauteils eines Axialflussmotors in Form eines Rotors oder Stators folgende Schritte:
- Additive Erzeugung eines alternierenden Schichtaufbaus mit rotationssymmetrischer Grundform, wobei verschiedene Schichten, nämlich eine Schicht ersten Typs aus einem Filament, welches Kunststoff und weichmagnetisches metallisches Material enthält, wobei das weichmagnetische metallische Material durch eine Eisenlegierung enthaltend 6,5 bis 10 Gew.-% Silizium sowie Aluminium im Bereich von 1 bis 5 Gew.-% gebildet wird, und eine Schicht zweiten Typs aus einem Filament, welches Kunststoff und Keramik enthält, ineinander geschachtelt werden, und wobei die Schichten entweder als zueinander konzentrische Ringe ineinander geschachtelt sind oder die Schichten spiralförmig aufgebaut werden, indem die Schichten bei einer Relativrotation zwischen dem Werkstück, das heißt dem entstehenden Schichtaufbau, und einer Anordnung aus mehreren Druckköpfen aufgebaut werden,
- Erhitzen des aus den verschiedenen Schichten erzeugten Schichtaufbaus auf eine erste Temperatur, bei der aus den Schichten Kunststoff entfernt wird,
- weiteres Erhitzen des Schichtaufbaus, womit das weichmagnetische metallische Material der Schicht ersten Typs gesintert und aus der Schicht zweiten Typs eine elektrisch isolierende Keramikschicht gewonnen wird.

Gemäß einer ersten erfindungsgemäßen Ausgestaltung sind die Schichten spiralförmig aufgebaut. Damit ist ein vielschichtiger Aufbau generierbar, welcher lediglich einen einzigen, spiralförmig gewickelten zusammenhängenden Volumenbereich, welcher mit dem Material ersten Typs, das heißt dem weichmagnetischen und elektrisch leitenden metallischen Material, ausgefüllt ist. Die einzelnen Windungen dieses spiralförmigen Volumenbereichs sind durch einen insgesamt ebenfalls spiralförmigen Volumenbereich, in welchem sich das Material zweiten Typs befindet, gegeneinander isoliert. Der spiralförmige Schichtaufbau ist mit Hilfe einer additiven Fertigungsanlage erzeugbar, in welcher das Werkstück, das heißt der entstehende Schichtaufbau, in Relation zu einer Anordnung aus mehreren Druckköpfen rotiert. Hierbei wird durch einen ersten Druckkopf die Schicht ersten Typs aufgebaut, während ein weiterer Druckkopf die Schicht zweiten Typs aufbaut. Die verschiedenen Druckköpfe können komplett oder größtenteils gleichzeitig betrieben werden. Insgesamt kann der Schichtaufbau entweder von innen nach außen oder von außen nach innen erfolgen.

Gemäß einer alternativen zweiten erfindungsgemäßen Ausgestaltung sind die Schichten als zueinander konzentrische Ringe ineinander geschachtelt. Insgesamt sind hierbei zum Beispiel mindestens vier, insbesondere mindestens acht, jeweils ringförmige, das heißt zylindrische, Schichten vorhanden. Auch eine wesentlich höhere Anzahl an Schichten, beispielsweise 30 oder mehr Schichten, ist mit diesem Aufbau erzeugbar.

Unabhängig davon, ob die Schichten eine spiralförmige Struktur oder einzelne Ringe beschreiben, fungieren die Schichten ersten Typs im fertigen Elektromotorbauteil als magnetflussleitende Schichten, welche durch Schichten zweiten Typs, das heißt Isolationsschichten, voneinander getrennt sind. Die verschiedenen Filamente, aus welchen die Schichten aufgebaut werden, werden allgemein als Kunststoff/Metall-Filament beziehungsweise Kunststoff/Keramik-Filament bezeichnet, wobei der vereinfachend als "Kunststoff" bezeichnete Bestandteil eines Filaments optional weitere Bestandteile enthält. In jedem Fall haben die zum Aufbau der Schichtanordnung verwendeten Filamente eine fadenförmige Gestalt, wobei der Durchmesser des Kunststoff/Metall-Filaments vom Durchmesser des Kunststoff/Keramik-Filaments abweichen kann.

Die nach dem vollständigen Aufbau der aus den verschiedenen Schichten gebildeten Anordnung erfolgende thermische Behandlung der gesamten Schichtanordnung geschieht unter Einhaltung einer definierten Temperaturkurve, wobei verschiedene Verfahrensvarianten möglich sind. In jedem Fall wird aus sämtlichen Schichten - nicht notwendigerweise gleichzeitig - der Kunststoffanteil zumindest größtenteils entfernt, bevor unmittelbar anschließend oder zu einem beliebigen späteren Zeitpunkt die Temperatur derart erhöht wird, dass eine Versinterung des Metalls der Schicht ersten Typs stattfindet und aus der zweiten Schicht, ebenfalls in einem Sinterprozess, eine Keramik entsteht.

Insgesamt führt die filamentbasierte generative Fertigung des Elektromotorbauteils, insbesondere Stators oder Rotors, zu einer Schichtstruktur, in welcher die elektrisch sowie weichmagnetischen leitenden Schichten, das heißt Schichten ersten Typs, durch Keramikschichten elektrisch gegeneinander isoliert sowie mechanisch fest miteinander verbunden sind. Durch die Verwendung von Filamenten als Precursor-Produkte ist im Vergleich zu pulverförmigen Ausgangsmaterialien eine wesentlich höhere geometrische Präzision erzielbar. Die mehrstufige Erhitzung der Schichtanordnung sorgt zudem dafür, dass das Werkstück, das heißt das herzustellende Elektromotorbauteil, bereits vor dem Sintern stabilisiert wird und unerwünschte Effekte, etwa durch Diffusion, minimiert werden. Die Dicke einer jeden Schicht des Fertigproduktes, das heißt des zum Einbau in einen Axialflussmotor geeigneten Bauteils, kann bedarfsgerecht eingestellt werden und beträgt beispielsweise nicht mehr als 0,35 mm. Bewährt hat sich eine Schichtdicke der weichmagnetischen metallischen Schicht im Bereich von 0,2 bis 0,35 mm und eine Schichtdicke der keramischen Schicht im Bereich von 0,01 bis 0,2 mm.

Gemäß einer möglichen Verfahrensführung wird das Werkstück, nachdem das erste Temperaturniveau erreicht ist, auf ein Temperaturzwischenniveau gebracht, welches näher am ersten Temperaturniveau als am zweiten Temperaturniveau, das heißt dem zum Sintern gewählten Temperaturniveau, liegt. Mit anderen Worten: das erste Temperaturniveau ist in zwei Niveaus gesplittet, welche nahe beieinander liegen können, jedoch deutlich voneinander unterscheidbar sind, und nacheinander eingestellt werden. Das gesplittete Temperaturniveau, welches vor dem Sintern angewandt wird, hat den Effekt, dass zunächst nur einer der Schichttypen und dann der andere Schichttyp verändert wird. Beispielsweise wird zunächst der Kunststoffanteil sämtlicher Schichten ersten Typs entfernt, wobei zugleich der zu diesem Zeitpunkt noch nicht beeinträchtigte Kunststoffanteil der Schichten zweiten Typs dafür sorgt, dass die metallischen Bestandteile sämtlicher Schichten ersten Typs vollständig voneinander getrennt bleiben. Bei der anschließenden, moderaten Erhöhung der Temperatur auf das Zwischenniveau treten praktisch keine Veränderungen in den Schichten ersten Typs mehr auf. Vielmehr wird in dieser Bearbeitungsphase der Kunststoff aus der Schicht zweiten Typs entfernt, wobei es nicht nachteilig ist, wenn hierbei Kunststoff teilweise in die Schicht ersten Typs gelangt.

Das spätere Sintern kann erfolgen, nachdem die vorherige Behandlung, das heißt das Entfernen von Kunststoff, entweder auf einem konstanten Temperaturniveau oder auf gesplitteten Niveaus erfolgt ist. Auch das Sintern kann einen Prozess darstellen, der entweder auf einem einheitlichen Temperaturniveau oder unter Anwendung unterschiedlicher, nacheinander eingestellter Temperaturen durchgeführt wird. Beispielsweise wird zunächst ein Temperaturniveau gewählt, bei dem das Sintern der im Wesentlichen metallischen Schicht, das heißt Schicht ersten Typs, abgeschlossen wird. Hierbei kann es zu einer Volumenabnahme des gesamten Bauteils kommen. Da in den keramischen Bestandteilen, das heißt innerhalb der Schichten zweiten Typs, in dieser Bearbeitungsphase noch keine Versinterung stattfindet, passt sich das keramische Material den Abmessungsänderungen der metallischen Schichten an. Anschließend wird ein als überhöhtes Niveau bezeichnetes Temperaturniveau eingestellt, bei welchem der Sinterprozess in den Schichten zweiten Typs abgeschlossen wird, das heißt aus diesen Schichten die endgültigen Keramikschichten entstehen. Die Grenzflächen zwischen den Metall- und den Keramikschichten sind letztlich derart strukturiert, dass zum einen eine feste Verzahnung zwischen den Schichten gegeben ist und zum anderen keine übergroßen Schwankungen der Schichtdicken auftreten.

Im Vergleich zu einer Herstellung von Elektromotorbauteilen aus Elektroblechen hat das anmeldungsgemäße Bauteil eines Axialflussmotors in Form eines Rotors oder Stators insbesondere den Vorteil, dass weitaus größere Freiheiten hinsichtlich der Zusammensetzung der Schichten existieren.

Der erfindungsgemäße Axialflussmotor umfasst mindestens ein erfindungsgemäßes Elektromotorbauteil in Form eines Rotors oder Stators, wobei es sich bei dem Axialflussmotor um einen Asynchronmotor handelt.

Bereits beim Aufbau der Schichten während der generativen Fertigung können Konturen wie Bohrungen in den Schichtaufbau eingebracht werden. Optional schließen sich an die generative Fertigung abschließende Bearbeitungsschritte an, welche eine thermische Behandlung und/oder mechanische Bearbeitung, beispielsweise Schleifen, umfassen können.

Nachfolgend werden mehrere Ausführungsbeispiele der Erfindung anhand einer Zeichnung näher erläutert. Hierin zeigen:
- Fig. 1: ein erstes Ausführungsbeispiel eines Stators eines Axialflussmotors in vereinfachter Schnittdarstellung,
- Fig. 2: eine Vorrichtung zur Herstellung des Stators nach Fig. 1 in symbolisierter Darstellung,
- Fig. 3: ein zweites Ausführungsbeispiel eines Stators eines Axialflussmotors in Darstellung analog Fig. 1,
- Fig. 4: in einem Flussdiagramm Grundzüge eines Verfahrens zur Herstellung eines Stators eines Axialflussmotors,
- Fig. 5 bis 7: verschiedene Varianten der Temperaturführung bei der Herstellung eines Stators eines Axialflussmotors.

Die folgenden Erläuterungen beziehen sich, soweit nicht anders angegeben, auf sämtliche Ausführungsbeispiele. Einander entsprechende oder prinzipiell gleichwirkende Teile oder Parameter sind in allen Figuren mit den gleichen Bezugszeichen gekennzeichnet.

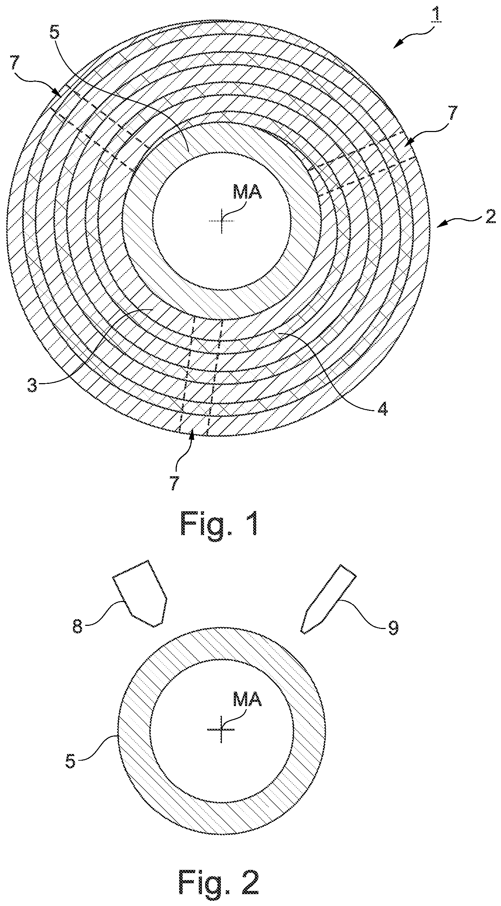

Bei einem insgesamt mit 1 bezeichneten Elektromotorbauteil handelt es sich um einen Stator eines nicht weiter dargestellten Axialflussmotors. Das Elektromotorbauteil 1 weist einen Schichtaufbau 2 auf, der aus mindestens einer Schicht 3 ersten Typs und mindestens einer Schicht 4 zweiten Typs gebildet ist. Innerhalb des fertiggestellten Elektromotorbauteils 1 handelt es sich bei den Schichten 3 ersten Typs um metallische Schichten aus weichmagnetischem metallischem Material und bei den Schichten 4 zweiten Typs um Keramikschichten. Ein in den Figuren 1 bis 3 erkennbares rohr- oder scheibenförmiges Trägerbauteil 5 ist von dem Schichtaufbau 2 umgeben und wird als Teil des Stators 1 bei der Montage des Elektromotors mit in diesen eingebaut. In alternativer Verfahrensführung hat das Trägerbauteil 5 lediglich eine Funktion bei der Erzeugung des Schichtaufbaus 2 und wird nach der Herstellung des Schichtaufbaus 2 wieder von diesem entfernt.

Bei der Herstellung der Schichtanordnung 2 wird auf Prinzipien des an sich bekannten ADAM-Verfahrens zurückgegriffen. Im Ausführungsbeispiel nach Fig. 1 sind die Schichten 3, 4 spiralförmig aufgebaut, wogegen sie im Ausführungsbeispiel nach Fig. 2 die Form konzentrisch ineinander geschachtelter Ringe haben.

Zur Erläuterung des Verfahrens, mit welchem der Schichtaufbau 2 des Stators 1 nach Fig. 1 erzeugbar ist, wird auf Fig. 2 verwiesen. Danach ist das metallische Trägerbauteil 5 in einer Anordnung, welche zwei Druckköpfe 8, 9 einer additiven Fertigungsanlage umfasst, positioniert. Die additive Fertigung kann erfolgen, indem entweder das Trägerbauteil 5 um dessen Mittelachse MA rotiert oder die Anordnung aus beiden Druckköpfen 8, 9 um das Trägerbauteil 5 rotiert, das heißt entlang des Umfangs des Trägerbauteils 5 geführt wird. Je nach Ausgestaltung der Druckköpfe 8, 9 und Dimensionierung des Trägerbauteils 5 kann auch eine axiale Relativbewegung - bezogen auf die Mittelachse MA - zwischen den Druckköpfen 8, 9 einerseits und dem Trägerbauteil 5 andererseits vorgesehen sein. In Fig. 1 angedeutete Bohrungen 7 werden unmittelbar bei der additiven Fertigung des Schichtaufbaus 2 erzeugt.

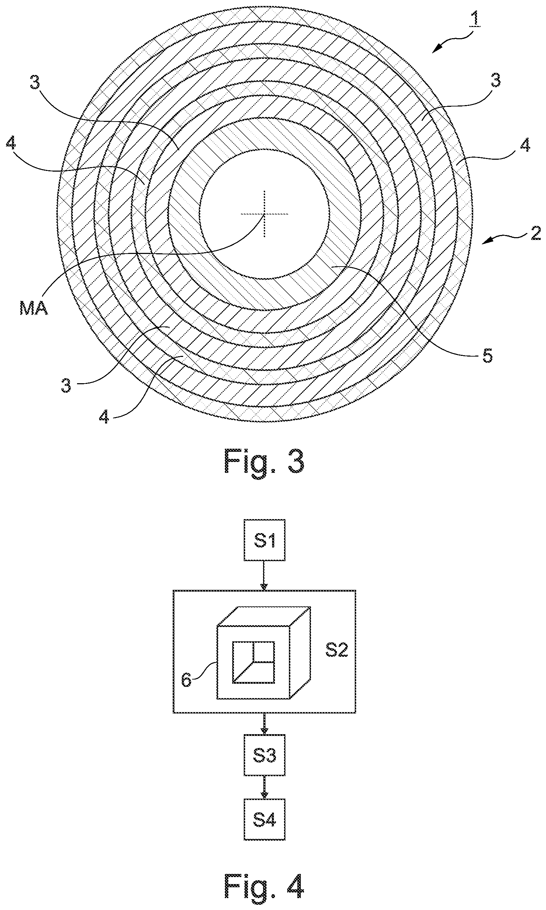

Das Flussdiagramm nach Fig. 4 erläutert die Herstellung des Elektromotorbauteils 1 nach Fig. 1 ebenso wie die Herstellung des Elektromotorbauteils 1 nach Fig. 3. In beiden Fällen wird in einem ersten Verfahrensschritt S1 zunächst der spiralförmige beziehungsweise zylindrische Schichtaufbau 2 per 3D-Druck erzeugt, das heißt ein Grünteil hergestellt.

Anschließend erfolgt im Schritt S2 eine thermische Behandlung des Schichtaufbaus 2, worauf noch näher eingegangen werden wird. Ein Ofen ist in Figur 4 mit 6 bezeichnet. Nach Abschluss der thermischen Behandlung erfolgt im Schritt S3 eine Nachbearbeitung des Schichtaufbaus 2, welche eine Oberflächenbearbeitung umfassen kann. Der Schritt S4 markiert den Abschluss des Verfahrens.

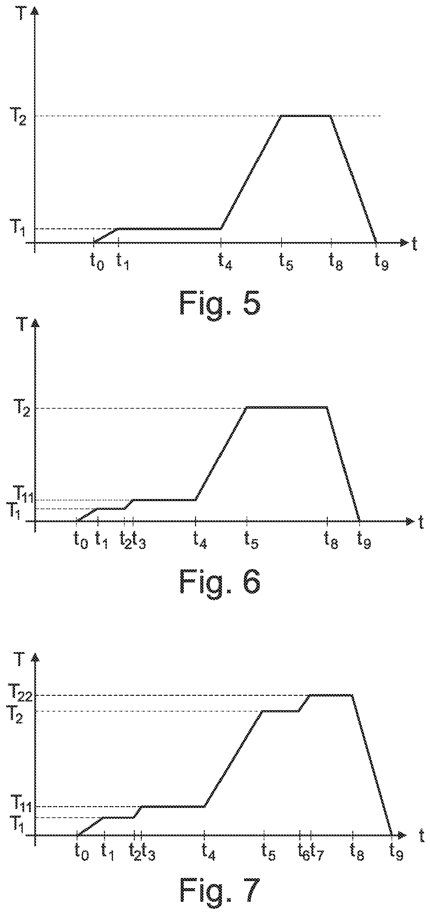

In den Figuren 5 bis 7 sind drei verschiedene Varianten der Temperaturführung im Verfahrensschritt S2 skizziert. Allen drei Varianten ist gemeinsam, dass die Temperatur T des Werkstücks, das des Schichtaufbaus 2, zunächst auf ein erstes Temperaturniveau T₁ angehoben wird, bei welchem Kunststoffbestandteile entfernt werden. Ein wesentlich höheres Temperaturniveau T₂, welches in allen Varianten erreicht wird, bewirkt einen Sinterprozess.

In der einfachsten, in Figur 5 veranschaulichten Variante wird im Zeitraum t₁ bis t₄ das Temperaturniveau T₁ gehalten. Das konstante Temperaturniveau T₂ wird in diesem Fall im Zeitraum t₅ bis t₈ gehalten.

In der Verfahrensvariante nach Figur 6 ist das untere Temperaturniveau gesplittet: Das erste Temperaturniveau T₁ wird lediglich im Zeitraum t₁ bis t₂ gehalten. Ein Temperaturzwischenniveau T₁₁, welches wesentlich näher am ersten Temperaturniveau T₁ als am zweiten Temperaturniveau T₂ liegt, ist im Zeitraum t₃ bis t₄ eingestellt. Insgesamt werden in dem Zeitraum t₁ bis t₄ Kunststoffbestandteile aus beiden Schichttypen 3, 4 entfernt, wobei die Temperaturniveaus T₁, T₁₁ derart eingestellt sind, dass nacheinander die Kunststoffbestandteile aus den verschiedenen Schichttypen 3, 4 entfernt werden. Was die thermische Behandlung auf dem zweiten Temperaturniveau T₂ betrifft, existieren keine Unterschiede zwischen der Variante nach Figur 5 und der Variante nach Figur 6.

Die Verfahrensvariante nach Figur 7 stimmt hinsichtlich der Behandlung auf den Temperaturniveaus T₁, T₁₁ mit der Variante nach Figur 6 überein. Unterschiede sind lediglich bei höheren Temperaturen gegeben: Nachdem das zweite Temperaturniveau T₂ von t₅ bis t₆ konstant gehalten wurde, wird im Zeitraum t₇ bis t₈ die Temperatur T auf ein überhöhtes Temperaturniveau T₂₂ eingestellt. Diese Splittung des höheren Temperaturniveaus sorgt dafür, dass die Sintervorgänge in den Schichttypen 3, 4 in definierter Weise nacheinander ablaufen.

Mit jeder der anhand der Figuren 5 bis 7 erläuterten Verfahrensvarianten sind Dicken der Schichten 3, 4 insbesondere von weniger als 0,35 mm realisierbar.

### Bezugszeichenliste

- 1: Elektromotorbauteil, Stator
- 2: Schichtaufbau
- 3: Schicht ersten Typs, Metallschicht
- 4: Schicht zweiten Typs, Keramikschicht
- 5: Trägerbauteil
- 6: Ofen
- 7: Bohrung
- 8: Druckkopf zur Herstellung der Schicht ersten Typs
- 9: Druckkopf zur Herstellung der Schicht zweiten Typs

- MA: Mittelachse
- S1... S4: Verfahrensschritte
- t: Zeit
- t₀...t₉: Zeitpunkte
- T: Temperatur
- T₁: erstes Temperaturniveau
- T₁₁: Temperaturzwischenniveau
- T₂: zweites Temperaturniveau
- T₂₂: überhöhtes Temperaturniveau

## Patentansprüche

1. Verfahren zur Herstellung eines Elektromotorbauteils (1) eines Axialflussmotors in Form eines Rotors oder Stators, mit folgenden Schritten:
- Additive Erzeugung eines alternierenden Schichtaufbaus (2) mit rotationssymmetrischer Grundform, wobei verschiedene Schichten (3, 4), nämlich eine Schicht (3) ersten Typs aus einem Filament, welches Kunststoff und weichmagnetisches metallisches Material enthält, wobei das weichmagnetische metallische Material durch eine Eisenlegierung enthaltend 6,5 bis 10 Gew.-% Silizium sowie Aluminium im Bereich von 1 bis 5 Gew.-% gebildet wird, und eine Schicht (4) zweiten Typs aus einem Filament, welches Kunststoff und Keramik enthält, ineinander geschachtelt werden, und wobei die Schichten (3, 4) entweder
als zueinander konzentrische Ringe ineinander geschachtelt werden oder die Schichten (3, 4) spiralförmig aufgebaut werden, indem die Schichten (3, 4) bei einer Relativrotation zwischen dem Werkstück, das heißt dem entstehenden Schichtaufbau (2), und einer Anordnung aus mehreren Druckköpfen (7, 8) aufgebaut werden,
- Erhitzen des aus den verschiedenen Schichten (3, 4) erzeugten Schichtaufbaus (2) auf eine erste Temperatur (T₁), bei der aus den Schichten (3, 4) Kunststoff entfernt wird,
- weiteres Erhitzen des Schichtaufbaus (2), womit das weichmagnetische metallische Material der Schicht (3) ersten Typs gesintert und aus der Schicht (4) zweiten Typs eine elektrisch isolierende Keramikschicht gewonnen wird.

2. Verfahren nach Anspruch 1, **dadurch gekennzeichnet, dass** das Sintern der Schichten (3, 4) auf zwei nacheinander eingestellten Temperaturniveaus (T₂, T₂₂) erfolgt.

3. Verfahren nach einem der Ansprüche 1 oder 2, **dadurch gekennzeichnet, dass** die Schichten (3, 4) von innen nach außen aufgebaut werden.

4. Verfahren nach einem der Anspruüche 1 oder 2, **dadurch gekennzeichnet, dass** die Schichten (3, 4) von außen nach innen aufgebaut werden.

5. Elektromotorbauteil eines Axialflussmotors in Form eines Rotors oder Stators, mit einem nach einem der Ansprüche 1 bis 4 additiv erzeugten Schichtaufbau (2) aus weichmagnetischen metallischen und keramischen Schichten (3, 4).

6. Elektromotorbauteil nach Anspruch 5, **dadurch gekennzeichnet, dass** die Dicke einer jeden Schicht (3, 4) nicht mehr als 0,35 mm beträgt.

7. Axialfussmotor umfassend mindestens ein Elektromotorbauteil (1) nach einem der Ansprüche 5 bis 6 in Form eines Rotors oder Stators, wobei es sich bei dem Axialflussmotor um einen Asynchronmotor handelt.

## Claims

1. A method for manufacturing an electric motor component (1) of an axial flow motor in the form of a rotor or stator, having the following steps:
- additively producing an alternating layer structure (2) with a rotationally symmetrical basic shape, wherein different layers (3, 4), namely a layer (3) of a first type made of a filament containing plastic and soft magnetic metallic material, wherein the soft magnetic metallic material is formed by an iron alloy containing 6.5 to 10 wt.% silicon and aluminium in the range of 1 to 5 wt.%, and a layer (4) of a second type made of a filament containing plastic and ceramic, are nested one inside the other, and wherein the layers (3, 4) are either
nested within one another as concentric rings or the layers (3, 4) are formed helically by depositing the layers (3, 4) during relative rotation between the workpiece, i.e. the resulting layer structure (2), and an arrangement comprising a plurality of print heads (7, 8),
- heating the layer structure (2) produced from the different layers (3, 4) to a first temperature (T₁) at which plastic is removed from the layers (3, 4),
- further heating the layer structure (2), whereby the soft magnetic metallic material of the layer (3) of the first type is sintered and an electrically insulating ceramic layer is obtained from the layer (4) of the second type.

2. The method according to claim 1, **characterised in that** the sintering of the layers (3, 4) takes place at two successively set temperature levels (T₂, T₂₂).

3. The method according to either one of claims 1 or 2, **characterised in that** the layers (3, 4) are built up from the inside outwards.

4. The method according to either one of claims 1 or 2, **characterised in that** the layers (3, 4) are built up from the outside inwards.

5. An electric motor component of an axial flow motor in the form of a rotor or stator, with a layer structure (2) additively produced according to any one of claims 1 to 4 from soft magnetic metallic and ceramic layers (3, 4).

6. The electric motor component according to claim 5, **characterised in that** the thickness of each layer (3, 4) is not more than 0.35 mm.

7. An axial flow motor comprising at least one electric motor component (1) according to either one of claims 5 to 6 in the form of a rotor or stator, wherein the axial flux motor is an asynchronous motor.

## Revendications

1. Procédé de fabrication d'un composant de moteur électrique (1) d'un moteur à flux axial sous la forme d'un rotor ou d'un stator, comportant les étapes suivantes :
- la génération par voie additive d'une structure en couches (2) alternées comportant une forme de base à symétrie de révolution, dans lequel différentes couches (3, 4), à savoir une couche (3) d'un premier type constituée d'un filament contenant du plastique et un matériau métallique magnétique doux, dans lequel le matériau métallique magnétique doux est formé par un alliage de fer contenant de 6,5 à 10 % en poids de silicium et de l'aluminium dans une plage de 1 à 5 % en poids, et une couche (4) d'un second type constituée d'un filament contenant du plastique et de la céramique, sont imbriquées l'une dans l'autre, et les couches (3, 4) étant imbriquées l'une dans l'autre sous forme d'anneaux concentriques l'un par rapport à l'autre ou les couches (3, 4) étant construites en forme de spirale, par le fait que les couches (3, 4) sont construites lors d'une rotation relative entre la pièce, c'est-à-dire la structure en couches (2) résultante, et un ensemble de plusieurs têtes d'impression (7, 8),
- le chauffage de la structure en couches (2), générée à partir des différentes couches (3, 4), à une première température (T₁) à laquelle le plastique est éliminé des couches (3, 4),
- le chauffage supplémentaire de la structure en couches (2), au cours duquel le matériau métallique magnétique doux de la couche (3) du premier type est fritté et une couche céramique électriquement isolante est obtenue à partir de la couche (4) du second type.

2. Procédé selon la revendication 1, **caractérisé en ce que** le frittage des couches (3, 4) s'effectue à deux niveaux de température (T₂, T₂₂) réglés successivement.

3. Procédé selon l'une des revendications 1 ou 2, **caractérisé en ce que** les couches (3, 4) sont construites de l'intérieur vers l'extérieur.

4. Procédé selon l'une des revendications 1 ou 2, **caractérisé en ce que** les couches (3, 4) sont construites de l'extérieur vers l'intérieur.

5. Composant de moteur électrique d'un moteur à flux axial sous la forme d'un rotor ou d'un stator, comportant une structure en couches (2) générée par voie additive selon l'une des revendications 1 à 4 à partir de couches (3, 4) métallique à magnétisme doux et céramique.

6. Composant de moteur électrique selon la revendication 5, **caractérisé en ce que** l'épaisseur de chaque couche (3, 4) ne dépasse pas 0,35 mm.

7. Moteur à flux axial comprenant au moins un composant de moteur électrique (1) selon l'une des revendications 5 à 6 sous la forme d'un rotor ou d'un stator, le moteur à flux axial étant un moteur asynchrone.
